Europäisches Patentamt

European Patent Office

Office européen des brevets

(11) Veröffentlichungsnummer: **0 225 967**
**B1**

(12) **EUROPÄISCHE PATENTSCHRIFT**

(45) Veröffentlichungstag der Patentschrift:
18.04.90

(51) Int. Cl.⁴: **F16L 49/00**

(21) Anmeldenummer: **86111204.3**

(22) Anmeldetag: **13.08.86**

(54) **Einrichtung zum Verbinden von Teilen.**

(30) Priorität: **07.12.85 DE 3543311**

(43) Veröffentlichungstag der Anmeldung:
**24.06.87 Patentblatt 87/26**

(45) Bekanntmachung des Hinweises auf die Patenterteilung:
**18.04.90 Patentblatt 90/16**

(84) Benannte Vertragsstaaten:
**AT BE CH DE FR GB IT LI LU NL SE**

(56) Entgegenhaltungen:
**CH-A- 257 822**
**DE-A- 2 015 341**
**FR-A- 1 391 945**

(73) Patentinhaber: **DIDIER-WERKE AG,
Lessingstrasse 16-18, D-6200 Wiesbaden(DE)**

(72) Erfinder: **Frey, Alfred, Haupstrasse 51,
D-6719 Wattenheim(DE)**
Erfinder: **Burger, Robert, Niederflörsheimer Strasse 8,
D-6521 Monsheim(DE)**

(74) Vertreter: **Brückner, Raimund, Dipl.-Ing., c/o
Didier-Werke AG Lessingstrasse 16-18,
D-6200 Wiesbaden(DE)**

## Beschreibung

Die Erfindung betrifft ein Verbindungssystem für keramische Rohrteile eines Wärmetauschers, insbesondere eines Rekuperators, der bei einer Betriebstemperatur von 200°C bis 800°C ein Medium führt.

Bei derartigen Rohrteilen, die bei hoher Betriebstemperatur ein Medium führen, ist eine dauerhaft dichte Verbindung besonders wichtig. Diese keramischen Teile lassen sich durch Schraub- oder Flanschverbindungen miteinander verbinden. Sie können auch vermörtelt oder verklebt werden. Solche Verbindungen sind meist starr bzw. spröde, so daß bei erhöhten Temperaturen Spannungen auftreten können, die die gewünschte Verbindung beeinträchtigen. Den genannten erhöhten Betriebstemperaturen werden die bekannten Rohrverbindungssysteme nicht gerecht.

So ist es beispielsweise aus der CH-A- 257 822 bekannt, wie vorerwähnt, als Dichtungsmaterial eine Mörtelmasse einzusetzen, die aushärtet und dann nur eine relativ niedrige Betriebstemperatur zuläßt. Deren Elastizität und Spannungsfreiheit sind sehr begrenzt und reichen nicht in den erforderlichen Temperaturbereich von 200 bis 800°C.

Auch das Verbindungssystem nach der FR-A- 1 391 945 ist hierfür nicht geeignet, denn als Abdichtung wird das Ausschäumen des Zwischenraumes zwischen den übereinander gesteckten Rohrteilen mit einem Polystyrol vorgeschlagen.

Diesem Kunststoff wird für den Schäumvorgang ein gaserzeugendes Treibmittel zugesetzt, das schon bei relativ geringer Temperatur reagiert. Für eine Betriebstemperatur über 200°C ist dieses Verbindungssystem schon wegen der Gefahr der Zersetzung des Kunststoffes nicht geeignet.

Ein weiteres Verbindungssystem ist in der DE-A- 2 015 341 offenbart, in dem die Rohrenden mit einer Verbindungsmuffe verbunden werden. Zwischen deren Wandung und der Rohrwandungen sind in Ringnuten elastische Dichtringe eingesetzt, in deren ringförmigen Zwischenraum ein Loch im Außenmantel eine fließfähige, kalt oder heiß aushärtende Kunstharzmasse eingepreßt ist. Auch diese Verbindung ist umständlich herstellbar und bildet nach dem Aushärten der Kunstharzmasse eine starre und spröde Rohrverbindung.

Andererseits ist es zum Festlegen eines mit einem Katalysator beschichteten Substrats in einem Behälter z.B. bekannt, dazwischen eine Füllmasse aus faserigem Füllstoff mit einem anorganischen Binder und 30 bis 80 Gew.-% eines quellbaren Materials, wie Vermiculit, also eines Blähglimmers, einzufüllen. Das Festlegen des Katalysatorträgers in dem Behälter erfolgt durch das Expandieren des Blähglimmers bei Erwärmung der gesamten Anordnung auf 300 bis 650°C (vgl. DE-OS 25 46 413).

Es sind auch keramische Fasermatten bekannt, die zu etwa 40 bis 60 Gew.-% aus Keramikfasern bestehen und fast 60 bis 40 Gew.-% Blähglimmer und einen organischen Binder enthalten. Werden solche Keramikfasermatten einer hohen Betriebstemperatur ausgesetzt, dann beginnt ab etwa 200°C der Blähglimmer unter Abgabe von Kristallwasser sich zu blähen. Dabei erfolgt eine beträchtliche Volumenzunahme der Keramikfasermatte, die bei Dauerbelastung bis zu einer Temperatur von etwa 800°C temperaturbeständig sind.

Aufgabe der Erfindung ist es, ein Verbindungssystem der eingangs genannten Art vorzuschlagen, mit der die keramischen Rohrteile eines Wärmetauschers mörtelfrei und ohne Verschraubung auf einfache Weise elastisch und spannungsfrei dicht miteinander verbunden und an die Rohre für die Zu- und Ableitung des Mediums angeschlossen sind.

Erfindungsgemäß ist obige Aufgabe bei einem Verbindungssystem der eingangs genannten Art gelöst durch Steckverbindungen mit jeweils einer formstabilen Verbindungsmuffe, die eine zwischen den beiden Rohrteilen liegende Fuge umgreift und zwischen ihrer Innenwandung und der Wandung des einen oder der beiden zu verbindenden Rohrteile einen Zwischenraum bildet, in den eine Matte aus Keramikfaser mit 40 bis 60 Gew.-% eines sich bei der Betriebstemperatur aufblähenden Blähmittels aus Blähglimmer eingelegt ist.

Hierdurch wird eine bei jeder Betriebstemperatur bis zu 800°C dauerhaft elastische und spannungsfreie sowie absolut dichte Verbindung von Konstruktionsteilen erreicht, wie sie bevorzugt und sehr einfach und vorteilhaft für das Zusammensetzen und den Anschluß von keramischen Rohren zur Herstellung eines Wärmetauschers einsetzbar sind. Diese Verbindung ist durch einfaches Einlegen eines Fasermattenstreifens herstellbar und ohne zu berücksichtigende Trocken- oder Festigungszeit mit der Betriebstemperatur belastbar. Denn sobald beispielsweise ein Heißgas- bzw. Abgasstrom die Rekuperator- oder sonstigen Wärmetauscher-Rohrschlangenbündel durchfließt und deren erfindungsgemäß verbundene Rohrteile auf 200 bis 800°C Betriebstemperatur bringt, dann bläht sich das Blähmittel der keramischen Fasermatte aus. Da diese kaum über den Freiraum hinaus ausweichen kann, baut die Fasermatte einen Druck auf, der die beiden Rohrteile kraftschlüssig zusammenhält. Zwischen den Rohrteilen besteht ein elastischer Klemmsitz, so daß die Verbindung nicht durch mechanische Spannungen belastet ist. Die Verbindung ist bei der Betriebstemperatur beständig und nimmt auch Temperaturspannungen auf. Die Herstellung der Verbindung ist einfach, da es sich um eine Steckverbindung handelt.

Die Verbindungs-Muffe kann als separates Bauteil ausgebildet sein und besteht vorteilhaft aus Keramik. Sie umfaßt dann die beiden zu verbindenden Enden der Rohrteile. Die Verbindungs-Muffe kann jedoch auch an einen der beiden Rohrteile ausgebildet sein. Hierfür sind die Rohrteile zylindrisch gerade Rohrstücke und Rohrkrümmer, wobei zweckmäßig die Rohrkrümmer jeweils an ihren zu verbindenden Enden zu einer Verbindungsmuffe mit einem, zu den geraden Rohrteile ausreichenden Zwischenraum ausgebildet sind, in den ein Streifen der keramischen Fasermatte einlegbar bzw. einschiebbar ist.

Das Verbindungssystem läßt sich vorteilhaft zur Verbindung von keramischen Rohren in Rekuperatoren verwenden, indem die Steckverbindungen innerhalb des Rekuperatorgehäuses liegen. Die Rohrverbindungen liegen dann innerhalb des Abgasstromes im Rekuperatorgehäuse. Es erübrigen sich dadurch zusätzliche, außen am Rekuperator angeordnete Kanäle bzw. Umlenkkammern.

Einrichtungen zum Verbinden keramischer Teile und auch Fasermassen schlechthin sind jeweils für sich allein bekannt. So wurde in der DE-PS 20 44 587 bereits vorgeschlagen, eine schaumzementartige Masse in die Kittfuge der Keramikteile zu schäumen und bei einer Temperatur von 1200 bis 1400°C einem Brennprozeß von 4 bis 12 Stunden Dauer auszusetzen. Die Masse setzt sich hierbei in eine starre und spröde Glaskeramik um und hat somit Eigenschaften, wie sie mit dem Anmeldungsgegenstand gerade vermieden werden sollen. Auch ist der Aufwand für diese Verbindung der Keramikteile viel zu hoch.

Die Verwendung keramischer Fasern zur Herstellung von Massen und Formteilen ist beispielsweise aus den DE-OS 31 05 531 und 31 05 534 sowie der DE-PS 32 25 161 bekannt, so nach der DE-PS 25 41 006 auch für die Herstellung von Dämmasse, der ebenfalls ein Material, wie Vermiculit, beigemischt ist. Dies allerdings im bereits expandierten Zustand als extrem leichtes Schüttgut, um die Dämmasse gut komprimierfähig zu halten. Aus keiner dieser Vorveröffentlichungen ist eine Anregung zur Lösung der anmeldungsgemäßen Aufgabe entnehmbar.

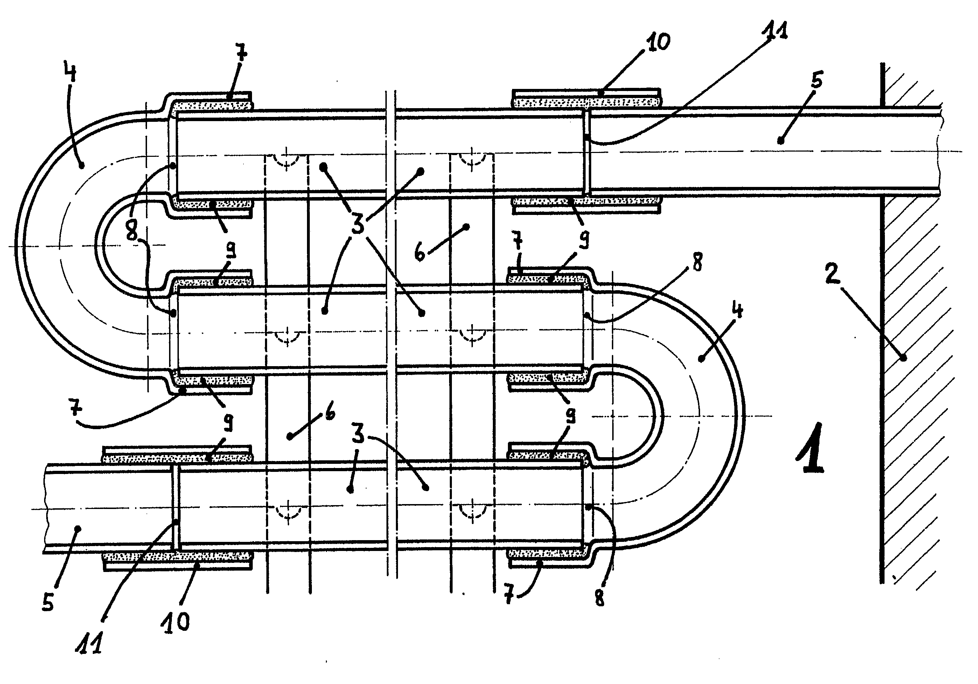

Eine vorteilhafte Ausgestaltung des erfindungsgemäßen Verbindungssystem wird in der folgenden Beschreibung anhand eines Ausführungsbeispiels eines Rohrschlangenbündels in einem Rekuperator beschrieben und in der Zeichnung dargestellt.

Im abgasdurchströmten Innenraum 1 eines Rekuperatorgehäuses 2 sind parallel angeordnete, zylindrisch gerade Rohrstücke 3 aus Keramik mittels Rohrkrümmern 4, ebenfalls aus Keramik, miteinander verbunden. Das oberste und unterste Rohrstück 3 ist mit einem Auslaß- bzw. Einlaßrohrstück 5 aus Keramik verbunden. Die Rohrstücke 3 sind mittels Abstandhaltern 6 im gewünschten Abstand gehalten.

An jedem Rohrkrümmer 4 sind beidendig Muffen 7 ausgebildet, die die Enden der zugeordneten Rohrstücke 3 übergreifen. Zwischen dem Rohrstück 3 und dem Rohrkrümmer 4 besteht eine Fuge 8, die wesentlich schmaler ist als die Länge der Muffe 7.

Der Innendurchmesser der Muffe 7 ist wenigstens um die doppelte Wandstärke des Rohrstücks 3 bzw. des Rohrkrümmers 4 größer als der Außendurchmesser des Rohrstücks 3. Dadurch ist zwischen der Muffe 7 und dem Ende des Rohrstücks 3 ein Zwischenraum gebildet. In diesen ist ein umlaufender Streifen einer keramischen Fasermatte 9 eingelegt.

Zur Verbindung des Rohrstücks 3 mit dem Auslaß- bzw. Einlaßrohrstück 5 ist eine Muffe 10 vorgesehen, die als eigenes, insbesondere keramisches, Bauteil ausgebildet ist. Diese Muffe 10 ist etwa doppelt so lang wie die Muffe 7 der Rohrkrümmer 4 und übergreift die beiden einander zugewandten Endabschnitte der Rohrstücke 3 und 5 und die zwischen diesen bestehende Fuge 11. Der Durchmesser der Muffe 10 entspricht dem der Muffe 7. In den Zwischenraum zwischen der Muffe 10 und den Endabschnitten der Rohrstücke 3 und 5 ist ebenfalls ein Streifen einer keramischen Fasermatte 9 eingelegt.

Die keramische Fasermatte 9 enthält zu etwa 40 bis 60 Gew.-% Blähglimmer, der bei einer Temperatur ab etwa 200°C zu einer Verdichtung der Fasermatte 9 führt.

Bei der Montage des Rohrbündels, die bei einer Temperatur unterhalb der Betriebstemperatur erfolgt, lassen sich die Rohrkrümmer 4 leicht auf die Endabschnitte der Rohrstücke 3 aufschieben. Dabei sind entweder die Streifen der Fasermatte 9 in die Muffen 7 eingelegt oder um die Enden der Rohrstücke 3 gelegt. Gleiches gilt für die Muffen 10.

Wird die Rohrschlage erstmals der Betriebstemperatur ausgesetzt, dann nimmt das Volumen der Streifen der keramischen Fasermatte 9 so zu, daß sich die Fasermatte 9 in dem Zwischenraum zwischen den Muffen 7 bzw. 10 und den Rohrstücken 3 bzw. 5 verspannt. Dadurch sind einerseits die Rohrkrümmer 4 und die Rohrstücke 5 mit den Rohrstücken 3 fest verbunden. Andererseits sind dadurch die Fugen 8 und 11 abgedichtet.

**Patentansprüche**

1. Verbindungssystem für keramische Rohrteile eines Wärmetauschers, insbesondere eines Rekuperators, der bei einer Betriebstemperatur von 200°C - 800°C ein Medium führt, gekennzeichnet durch Steckverbindungen mit jeweils einer formstabilen Verbindungsmuffe (7, 10), die eine zwischen den beiden Rohrteilen (3, 4, 5) liegende Fuge (8, 11) umgreift und zwischen ihrer Innenwandung und der Wandung des einen oder der beiden zu verbindenden Rohrteile (3, 4, 5) einen Zwischenraum bildet, in den eine Matte (9) aus Keramikfaser mit 40 - 60 Gew.% eines sich bei der Betriebstemperatur aufblähenden Blähmittels aus Blähglimmer eingelegt ist.

2. Verbindungssystem nach Anspruch 1, dadurch gekennzeichnet, daß der Wärmetauscher aus zylinderisch geraden Rohrteilen (3, 5) und Rohrkrümmern (4) zusammengesteckt ist, wobei die Rohrkrümmer (4) jeweils an ihren zu verbindenden Enden zu einer Verbindungsmuffe (7) mit einem, zu den geraden Rohrteilen (3) ausreichenden Zwischenraum ausgebildet sind, in den ein Streifen der keramischen Fasermatte (9) einlegbar bzw. einschiebbar ist.

3. Verwendung eines Verbindungssystems nach Anspruch 1 oder 2, bei einem Rekuperator, indem die Steckverbindungen innerhalb des Innenraums (1) des Rekuperatorgehäuses (2) liegen.

**Claims**

1. Connecting system for ceramic tubular members of a heat exchanger, particularly a recuperator, which conducts a medium at an operational temperature of 200°C - 800°C, characterised by plug connections with a respective connecting sleeve (7, 10) of stable shape which extends around a joint (8, 11) between the two tubular members (3, 4, 5) and, between its inner wall and the wall of one or both of the tube members (3, 4, 5) to be connected, defines a space into which is inserted a mat (9) of ceramic fibre material with 40 - 60 wt.% of an expanding agent comprising expansible mica which expands at the operational temperature.

2. Connecting system as claimed in claim 1, characterised in that the heat exchanger comprises straight cylindrical tubular members (3, 5) and tubular elbows (4), the tubular elbows (4) each being constructed at their ends to be connected in the form of a connecting sleeve (7) with a space sufficient for the straight tubular members (3) into which a strip of the ceramic fibre mat (9) may be inserted or pushed.

3. Use of a connecting system as claimed in claim 1 or 2 in a recuperator in which the plug connections are disposed within the interior (1) of the recuperator housing (2).

**Revendications**

1. Dispositif de raccordement d'éléments de tubes céramiques d'un échangeur de chaleur, en particulier d'un récupérateur, qui, à une température de fonctionnement allant de 200°C à 800°C, conduit un fluide, caractérisé par des raccords à emboîtement comportant chacun un manchon de raccordement (7, 10) indéformable qui enveloppe un intervalle (8, 11) situé entre les deux éléments de tubes (3, 4, 5) et qui, entre sa paroi interne et la paroi d'un ou des deux éléments de tubes à raccorder (3, 4, 5), forme un espace intermédiaire dans lequel est inséré un matelas (9) de fibre céramique se composant de 40 à 60 % en poids d'un agent d'expansion, à base de mica expansé, qui gonfle à la température de fonctionnement.

2. Dispositif de raccordement selon la revendication 1, caractérisé en ce que l'échangeur de chaleur est assemblé à partir d'éléments de tubes (3, 5) rectilignes cylindriques et des coudes (4), lesdits coudes (4) étant respectivement conformés à leurs extrémités de raccordement en un manchon de raccordement (7) qui, par rapport aux éléments de tubes (3) rectilignes, présente un espace intermédiaire suffisant, dans lequel il est possible d'insérer ou de glisser une bande du matelas de fibre céramique (9).

3. Utilisation du dispositif de raccordement selon la revendication 1 ou 2, dans un récupérateur, les raccords à emboîtement étant situés à l'intérieur de l'espace interne (1) de l'enveloppe (2) du récupérateur.

EP 0 225 967 B1